# EUROPEAN PATENT SPECIFICATION

(11) **EP 2 905 686 B1**
(45) Date of publication and mention of the grant of the patent: **06.03.2019**
(21) Application number: 13852816.1
(22) Date of filing: 29.08.2013
(51) Int. Cl.: G06F 3/048, G06F 3/0488

(54) **METHOD AND DEVICE FOR ENLARGING MOBILE APPLICATION EDIT BOX BASED ON EVENT MONITOR**
VERFAHREN UND VORRICHTUNG ZUR VERGRÖSSERUNG EINES BEARBEITUNGSFELDES EINER MOBILEN ANWENDUNG AUF BASIS EINES EREIGNISMONITORS
PROCÉDÉ ET DISPOSITIF POUR AGRANDIR UNE BOÎTE D'ÉDITION D'APPLICATION MOBILE D'APRÈS UN DISPOSITIF DE SURVEILLANCE D'ÉVÉNEMENT

(30) Priority: 12.11.2012 CN 201210448700
(43) Date of publication of application: 12.08.2015
(73) Proprietor: ZTE Corporation, Shenzhen, Guangdong 518057 (CN)
(72) Inventor: QU, Guiliang, Shenzhen Guangdong 518057 (CN); YANG, Yong, Shenzhen Guangdong 518057 (CN); WANG, Bin, Shenzhen Guangdong 518057 (CN)
(74) Representative: Modiano, Micaela Nadia
(86) International application number: PCT/CN2013/082580
(87) International publication number: WO 2014/071767

(56) References cited:
- CN-A- 101 635 764
- CN-A- 101 729 656
- CN-A- 101 763 218
- JP-A- H11 161 399
- US-A1- 2009 251 422
- US-A1- 2011 010 668
- US-A1- 2011 320 978
- US-A1- 2012 220 263

## Description

### Technical Field

The present invention relates to the field of mobile applications, and in particular, to a method for enlarging a mobile application edit box based on event monitor and a related apparatus.

### Background of the Related Art

With the rapid development of network technologies, people gradually like and get used to use handheld mobile terminals such as mobile phones, PDAs etc. to chat online, send emails, tweet, browse webs, apply a search engine for query or playing games etc., and in this process, users of the mobile application terminals necessarily face a large amount of data input.

The mobile application terminals, mostly such as mobile phones, have relatively small screens. After the web pages are optimized and rearranged, the original edit box will be optimized according to the size of the screen, which may lead to an extremely small edit box in the mobile application, and in the process of information input, the input contents cannot be accurately and clearly viewed.

Currently, the mobile application terminals, mostly such as mobile phones, have small screens, and the positions and contents which can be used for display are very limited, which brings great inconvenience to users during information input. This undoubtedly becomes the biggest obstacle to hinder the promotion and popularization of mobile applications.

US2009/251422 describes a method and system for enhancing interaction of a virtual keyboard in a small touch screen.

### Summary of the Invention

The purpose of the present invention is to provide a method and apparatus for enlarging a mobile application edit box based on event monitor, which can better solve the problem of difficulty in input due to an extremely small edit box in the mobile applications.

The scope of the invention is defined by the independent claims. Preferred embodiments are described by the dependent claims.

Compared with the prior art, the embodiments of the present invention have the following beneficial effects:
The embodiments of the present invention makes great improvement in the experience of information input in the edit box, achieves the effect of displaying input information in the edit box, saves the time for the user to input information and improves user experience of information input.

### Brief Description of Drawings

Fig. 1 is a block diagram of the principle of a method for enlarging a mobile application edit box based on event monitor according to an embodiment of the present invention;
Fig. 2 is a block diagram of a setting part of an apparatus for enlarging a mobile application edit box based on event monitor according to an embodiment of the present invention;
Fig. 3 is a block diagram of an enlarging part of an apparatus for enlarging a mobile application edit box based on event monitor according to an embodiment of the present invention;
Fig. 4 is a flowchart of an apparatus for enlarging a mobile application edit box based on event monitor according to an embodiment of the present invention;
Fig. 5 is a flowchart of operations of a setting part according to an embodiment of the present invention;
Fig. 6 is a presentation diagram of an edit box in a mobile application in the current stage according to an embodiment of the present invention; and
Fig. 7 is a diagram of an effect after a terminal invokes the plug-in for redrawing according to an embodiment of the present invention.

### Preferred Embodiments of the Present Invention

The preferable embodiments of the present invention will be described in detail below in conjunction with accompanying drawings. It should be understood that the preferable embodiments illustrated hereinafter are merely used for illustration and explanation of the present invention, instead of limiting the present invention.

The embodiments of the present invention realize a method for enlarging an edit box in an operating system of a mobile terminal, which implements event binding of the edit box by monitoring and intercepting a user input event, without actively invoking the present invention by another application. At the same time, the present invention redraws the interface (the enlargement proportion of the newly drawn interface may be configured by a local enlarging module), and adaptively enlarges the edit box and the touch keyboard (the enlargement factor of the edit box and the touch keyboard may be set by an enlargement factor configuration module) in the new interface according to the size of the newly drawn interface in the mobile application, which are supplied to the user to input information

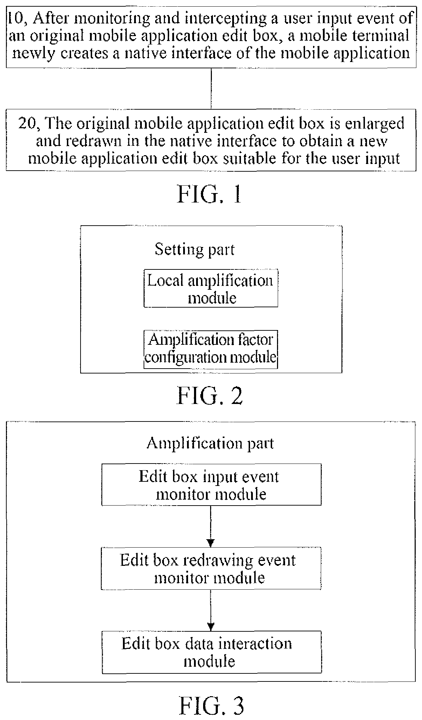

Fig. 1 is a block diagram of the principle of a method for enlarging a mobile application edit box based on event monitor according to an embodiment of the present invention. As shown in Fig. 1, the following steps are comprised.

In step 10, after monitoring and intercepting a user input event of an original mobile application edit box, a mobile terminal newly creates a native interface of the mobile application.

Further, when the mobile terminal is started, a system broadcast will be issued, which has contents of ACTION_BOOT_COMPLETED (the string constant is represented as android.intent.action.BOOT_COMPLETED). When this message is captured, a plug-in apparatus according to the present invention is started and operated. The user sets a local enlarging module, i.e., a user sets a local enlargement proportion of the plug-in. If the user implements the setting, the enlarged interface of the original mobile application edit box is set according to the local enlargement proportion set by the user. Otherwise, a default value is used to enlarge the enlarged interface of the original mobile application edit box to the whole screen of the terminal, so as to obtain the redrawn and enlarged interface. The user sets an enlargement factor configuration module, i.e., the user sets the input enlargement proportion of the original mobile application edit box, font, and touch keyboard in the redrawn and enlarged interface. If the user sets the proportion, the original mobile application edit box and/or font and/or touch keyboard are enlarged in the new interface according to the proportion set by the user. Otherwise, the proportion of the redrawn and enlarged interface will be adapted to enlarge the edit box and/or font and/or touch keyboard. When the user clicks on the edit box in the mobile application, it will trigger the edit box input event monitor module in the apparatus, which will monitor and intercept the user input event, and trigger monitor of the edit box redrawing event.

In step 20, the original mobile application edit box is enlarged and redrawn in the native interface to obtain a new mobile application edit box suitable for the user input, which is supplied to the user to input information.

Further, the mobile application newly creates, redraws, and enlarges a native interface of a mobile application through an edit box redrawing event monitor module, enlarges the newly created native interface according to the local enlargement factor preset by the user, and if the local enlargement proportion is not preset by the user, enlarges the native interface to the whole screen of the mobile terminal by default, to obtain a redrawn and enlarged interface. After the redrawn and enlarged interface is obtained, the original mobile application edit box, font and touch keyboard are enlarged adaptively in the redrawn and enlarged interface, and if the input enlargement proportion is not preset by the user, the original mobile application edit box and/or font and/or touch keyboard are adaptively enlarged by taking adaptive enlargement of the redrawn interface as a reference, to form a new enlarged and redrawn interface, which may be used as an information input interface of the user. After the user completes the information input, the mobile application rewrites the information input by the user in the information input interface into the original mobile application edit box by using an edit box data interaction module, and automatically closes the redrawn information input interface, so as to complete the data interaction process.

The embodiments of the present invention further realize a plug-in apparatus in an operating system of a mobile terminal. After the operating system of the mobile terminal is started, it will start the edit box input event monitor module in the plug-in apparatus. The plug-in apparatus realizes enlargement of the edit box in the mobile application for presentation, thereby improving the information input speed of the mobile terminal. The apparatus will be described in detail below in conjunction with Figs. 2 and 3.

Fig. 2 is a block diagram of a setting part of an apparatus for enlarging a mobile application edit box based on event monitor according to an embodiment of the present invention. As shown in Fig. 2, the setting part of the apparatus comprises a local amplification module and an amplification factor configuration module,

The local amplification module is used to preset a local amplification proportion, which is supplied to the edit box redrawing module to amplify the native interface according to the local amplification proportion, to obtain a redrawn and amplified interface. That is, the local amplification module is used to set an amplification proportion of the redrawn and amplified interface, i.e., configuring the proportion of the screen of the mobile terminal which is occupied by the new amplified interface of the edit box. The local amplification module configures a size of the redrawn and amplified interface when the original mobile application edit box is clicked. The module may be configured by the user. When the module is not configured by the user, the size of the redrawn and amplified interface is a screen which occupies the whole mobile terminal by default.

The amplification factor configuration module is used to preset an input amplification proportion, which is supplied to the edit box redrawing module to amplify the original mobile application edit box and/or font and/or touch keyboard in the redrawn and amplified interface according to the input amplification proportion, to form an information input interface. That is, the amplification factor configuration module is used to configure the amplification proportion of the edit box in the redrawn and amplified interface and/or font in the edit box and/or the touch keyboard. The proportion may be set by the user himself/herself. If the proportion is not set by the user, the amplification proportion of the redrawn and amplified interface will be adapted to select a suitable proportion for amplification.

Fig. 3 is a block diagram of an enlarging part of a system for enlarging a mobile application edit box based on event monitor according to an embodiment of the present invention. As shown in Fig. 3, an edit box input event monitor module, an edit box redrawing event monitor module, and an edit box data interaction module are comprised.

The edit box input event monitor module is used to monitor the user input event of the mobile application edit box, and intercept the event. Further, after the operating system of the mobile terminal is started, the operating system will automatically invoke the original mobile application edit box input event monitor module, and monitor and intercept an event of a user clicking on the original mobile application edit box through the mobile application edit box input event monitor module, and trigger the edit box redrawing event monitor module.

The edit box redrawing event monitor module is used to newly create the native interface of the mobile application after the edit box input event monitor module monitors and intercepts the user input event, and amplify and redraw the original mobile application edit box in the native interface, to obtain a new mobile application edit box suitable for user input, which is supplied to the user to input information. Further, after creating the native interface of the mobile application, the edit box redrawing event monitor module implements an amplifying process on the native interface, to obtain a redrawn and amplified interface, and implements an amplifying process on the edit box and/or font and/or touch keyboard in the redrawn and amplified interface, to form an information input interface suitable for user input, which is supplied to the user to input information. That is, the edit box redrawing event monitor module redraws the original mobile application edit box and the touch keyboard in the newly created native interface in proportion.

The edit box data interaction module is used to rewrite the user input information in the original mobile application edit box after the user completes the information input. That is, the edit box data interaction module rewrites the user input data in the redrawn interface into the original mobile application edit box.

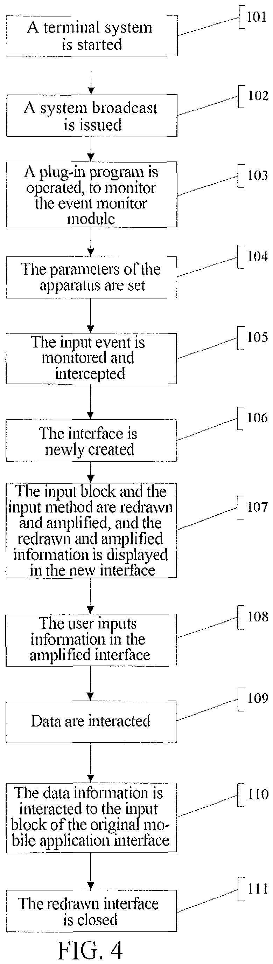

Fig. 4 is a flowchart of an apparatus for enlarging a mobile application edit box based on event monitor according to an embodiment of the present invention. As shown in Fig. 4, the following steps are comprised.

In step 101, an operating system of a mobile terminal is started.

In step 102, the system issues a system broadcast with contents of ACTION_BOOT_COMPLETED.

In step 103, when the system broadcast is captured, an edit box input event monitor module is started and operated.

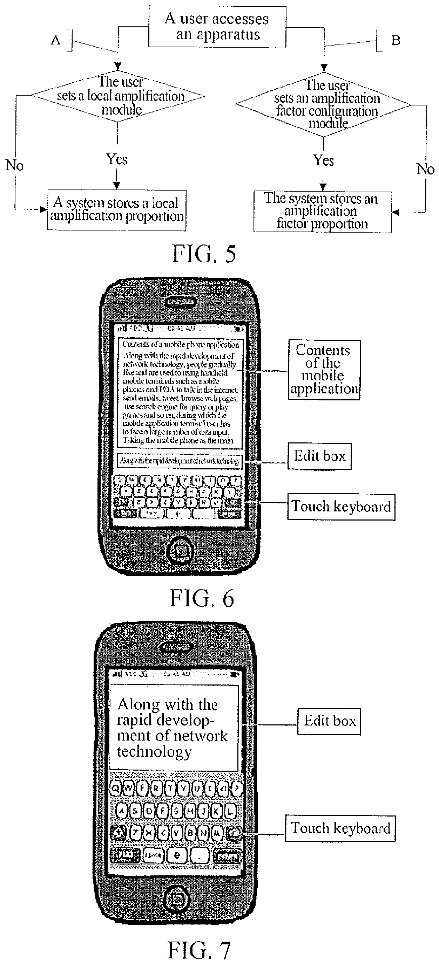

In step 104, the user may access the setting part in the apparatus, and the specific setting steps may be known with reference to the flowchart of the operation of the setting part illustrated in Fig. 5.

In step 105, when the user clicks on the original mobile application edit box, the edit box input event monitor module will automatically monitor and intercept the user input event, and invoke the edit box redrawing event monitor module.

In step 106, the edit box redrawing event monitor module firstly automatically newly creates a native interface of a mobile application, and enlarges the native interface according to a local amplification proportion previously preset by a user, to obtain a new native interface of the mobile application, i.e., redrawing the amplified interface, which is supplied to the user to input information.

In step 107, in the redrawn and amplified interface, the amplifying and redrawing event monitor module will firstly calculates an amplification proportion of the redrawn and amplified interface according to an adaptive algorithm, and adaptively amplifies and redraws the original mobile application edit box and the touch keyboard (the amplification factor is decided according to the preset input amplification proportion) in the redrawn and amplified interface, to obtain new mobile application edit box and touch keyboard, and display the amplified and redrawn information in the amplified native interface of the mobile application.

In step 108, the user inputs information in the new mobile application edit box using the touch keyboard.

In step 109, an edit box data interaction module is invoked.

In step 110, the edit box data interaction module interacts the data information input by the user in the new mobile application edit box in the original mobile application edit box.

In step 111, the redrawn interface is automatically closed, and the data interaction process is completed.

Fig. 5 is a flowchart of operations of a setting part according to an embodiment of the present invention. As shown in Fig. 5, the following steps are comprised.

The process A is that the user accesses the plug-in apparatus and sets a local amplification module. If the module has been preset by the user, the plug-in apparatus will amplify the amplified interface of the edit box using the preset local amplification proportion, i.e., amplifying the newly created native interface. If the module has not been preset by the user, the plug-in apparatus will use a default value, to set the amplification proportion of the amplified interface of the edit box to the whole screen of the terminal.

The process B is that the user accesses the plug-in apparatus and sets an amplification factor configuration module. If the module has been preset by the user, the plug-in apparatus will amplify the edit box, the font and the touch keyboard using the preset input amplification proportion. If the module has not been preset by the user, the plug-in apparatus will use a default value, to adaptively amplify the edit box, the font and the touch keyboard in the amplified interface according to the proportion of the amplified interface.

Fig. 6 is a presentation diagram of an edit box in a mobile application in the current stage according to an embodiment of the present invention; and Fig. 7 is a diagram of an effect after a terminal invokes the plug-in for redrawing according to an embodiment of the present invention. It can be clearly seen from the figures that the redrawn information input interface is easier for information input, and at the same time, the contents input by the user can be clearly displayed.

Further, the plug-in apparatus also well supports the text field and the search box in the mobile application.

In addition, the present invention further provides a mobile terminal, which comprises the above apparatus for enlarging a mobile application edit box based on event monitor.

In conclusion, the present invention has the following technical effects:
The present invention redraws the original edit box of the mobile application in the new interface, which effectively solves the problem of difficulty in input due to an extremely small edit box in the mobile application, and largely improves the user experience of data input in the edit box.

Although the present invention is described in detail above, the present invention is not limited thereto. Those skilled in the art can make various modifications according to the principle of the present invention.

### Industrial Applicability

The embodiments of the present invention makes great improvement in the experience of information input in the edit box, achieves the effect of displaying input information in the edit box, saves the time for the user to input information and improves user experience of information input.

## Claims

1. A method for enlarging a mobile application edit box based on an event monitor, comprising:
after monitoring and intercepting a user input event to an original mobile application edit box, newly creating a native interface of the mobile application (10); and
enlarging and redrawing the original mobile application edit box in the native interface to obtain a new enlarged mobile application edit box, which is supplied for a user to input information (20);
wherein the method is performed by a plug-in in an operating system of a mobile terminal, and the plug-in is started when the operating system of the mobile terminal starts.

2. The method according to claim 1, further comprising:
implementing an enlarging process on the native interface according to a preset local enlargement proportion.

3. The method according to claim 1 or 2, further comprising:
implementing enlarging and redrawing processes on the original mobile application edit box in the enlarged native interface according to a preset input enlargement proportion.

4. The method according to claim 3, wherein, if the input enlargement proportion is not preset, implementing adaptive enlarging and redrawing processes on the original mobile application edit box according to the enlarged native interface.

5. The method according to claim 4, further comprising:
implementing enlarging and redrawing processes on a touch keyboard for information input or a font of information input by the user in the new mobile application edit box according to the input enlargement proportion or the enlarged native interface.

6. The method according to claim 1 or 2, further comprising:
rewriting the user input information (20) in the new mobile application edit box into the original mobile application edit box and closing the native interface.

7. A mobile terminal running a plug-in in an operating system, for enlarging a mobile application edit box based on an event monitor, comprising:
an edit box input event monitor module, configured to monitor and intercept a user input event to a mobile application edit box; and
an edit box redrawing event monitor module, configured to, after monitoring and intercepting the user input event, newly create an native interface of the mobile application, enlarge and redraw the original mobile application edit box in the native interface to obtain a new enlarged mobile application edit box, which is supplied for a user to input information;
wherein the plug-in is started when the operating system of the mobile terminal starts.

8. The mobile terminal according to claim 7, wherein, the edit box redrawing event monitor module is further configured to implement an enlarging process on the native interface according to a preset local enlargement proportion.

9. The mobile terminal according to claim 7 or 8, wherein, the edit box redrawing event monitor module is further configured to implement enlarging and redrawing processes on the original mobile application edit box and/or a touch keyboard and/or a font according to the preset input enlargement proportion or the enlarged native interface.

10. The mobile terminal according to claim 7 or 8, further comprising:
an edit box data interaction module, configured to rewrite the user input information (20) in the new mobile application edit box into the original mobile application edit box and close the native interface.

## Patentansprüche

1. Ein Verfahren zur Vergrößerung eines Bearbeitungsfeldes einer mobilen Anwendung auf Basis eines Ereignismonitors, Folgendes umfassend:
nach Überwachung und Abfangen eines Benutzereingabeereignisses in ein ursprüngliches Bearbeitungsfeld einer mobilen Anwendung, Neuerstellen einer systemspezifischen Schnittstelle der mobilen Anwendung (10); und
Vergrößern und Neuzeichnen des ursprünglichen Bearbeitungsfeldes der mobilen Anwendung in der systemspezifischen Schnittstelle, um ein neues, vergrößertes Bearbeitungsfeld der mobilen Anwendung zu erhalten, das einem Benutzer zur Eingabe von Informationen (20) zur Verfügung gestellt wird;
wobei das Verfahren durchgeführt wird durch ein Plug-in in einem Betriebssystem eines mobilen Endgeräts und das Plug-in gestartet wird, wenn das Betriebssystem des mobilen Endgeräts startet.

2. Das Verfahren gemäß Anspruch 1, das weiter Folgendes umfasst: Implementieren eines Vergrößerungsprozesses in der systemspezifischen Schnittstelle entsprechend einer vordefinierten lokalen Vergrößerungsproportion.

3. Das Verfahren gemäß Anspruch 1 oder 2, das weiter Folgendes umfasst:
Implementieren von Vergrößerungs- und Neuzeichnungsprozessen im ursprünglichen Bearbeitungsfeld der mobilen Anwendung in der vergrößerten systemspezifischen Schnittstelle entsprechend einer vordefinierten eingegebenen Vergrößerungsproportion.

4. Das Verfahren gemäß Anspruch 3, worin, wenn die eingegebene Vergrößerungsproportion nicht vordefiniert ist, adaptive Vergrößerungs- und Neuzeichnungsprozesse im ursprünglichen Bearbeitungsfeld der mobilen Anwendung entsprechend der vergrößerten systemspezifischen Schnittstelle implementiert werden.

5. Das Verfahren gemäß Anspruch 4, das weiter Folgendes umfasst: das Implementieren von Vergrößerungs- und Neuzeichnungsprozessen auf einer Berührungstastatur zur Informationseingabe oder einem Schriftzeichensatz für die Informationseingabe durch den Benutzer im neuen Bearbeitungsfeld der mobilen Anwendung entsprechend der eingegebenen Vergrößerungsproportion oder der vergrößerten systemspezifischen Schnittstelle.

6. Das Verfahren gemäß Anspruch 1 oder 2, das weiter Folgendes umfasst:
Neuschreiben der Benutzereingabeinformationen (20) im neuen Bearbeitungsfeld der mobilen Anwendung in das ursprüngliche Bearbeitungsfeld der mobilen Anwendung und Schließen der systemspezifischen Schnittstelle.

7. Ein mobiles Endgerät, auf dem ein Plug-in in einem Betriebssystem ausgeführt wird,
zur Vergrößerung eines Bearbeitungsfeldes einer mobilen Anwendung auf Basis eines Ereignismonitors, Folgendes umfassend:
ein Eingabeereignismonitormodul eines Bearbeitungsfeldes, konfiguriert, um ein Benutzereingabeereignis in ein Bearbeitungsfeld einer mobilen Anwendung zu überwachen und abzufangen; und
ein Neuzeichnungsereignismonitormodul eines Bearbeitungsfeldes, konfiguriert, um nach der Überwachung und dem Abfangen des Benutzereingabeereignisses eine systemspezifische Schnittstelle der mobilen Anwendung neu zu erstellen, das ursprüngliche Bearbeitungsfeld der mobilen Anwendung in der systemspezifischen Schnittstelle zu vergrößern und neu zu zeichnen, um ein neues vergrößertes Bearbeitungsfeld der mobilen Anwendung zu erhalten, das einem Benutzer zur Eingabe von Informationen zur Verfügung gestellt wird;
wobei das Plug-in gestartet wird, wenn das Betriebssystem des mobilen Endgeräts startet.

8. Das mobile Endgerät gemäß Anspruch 7, wobei das Monitormodul für das Ereignis der Neuzeichnung des Bearbeitungsfeldes weiter konfiguriert ist, um entsprechend einer vordefinierten lokalen Vergrößerungsproportion einen Vergrößerungsprozess an der systemspezifischen Schnittstelle zu implementieren.

9. Das mobile Endgerät gemäß Anspruch 7 oder 8, wobei das Monitormodul für das Ereignis der Neuzeichnung des Bearbeitungsfeldes weiter konfiguriert ist, um entsprechend der vordefinierten Eingabevergrößerungsproportion oder der vergrößerten systemspezifischen Schnittstelle Vergrößerungs- und Neuzeichnungsprozesse in dem ursprünglichen Bearbeitungsfeld der mobilen Anwendung und/oder einer Berührungstastatur und/oder einem Schriftzeichensatz zu implementieren.

10. Das mobile Endgerät gemäß Anspruch 7 oder 8, das weiter Folgendes umfasst:
ein Bearbeitungsfeld-Daten-Interaktionsmodul, konfiguriert, um die Benutzereingabeinformationen (20) im neuen Bearbeitungsfeld für die mobile Anwendung neu in das ursprüngliche Bearbeitungsfeld für die mobile Anwendung zu schreiben und die systemspezifische Schnittstelle zu schließen.

## Revendications

1. Procédé pour agrandir une zone de saisie de texte d'application mobile basée sur un dispositif de surveillance d'évènement, comprenant les étapes suivantes :
après avoir surveillé et intercepté un évènement d'entrée d'utilisateur dans une zone de saisie de texte d'application mobile originale, créer de façon nouvelle une interface native de l'application mobile (10) ; et
agrandir et redessiner la zone de saisie de texte d'application mobile originale dans l'interface native pour obtenir une nouvelle zone de saisie de texte d'application mobile agrandie, qui est fournie pour qu'un utilisateur puisse saisir des informations (20) ;
dans lequel le procédé est exécuté par un module d'extension d'un système d'exploitation d'un terminal mobile, et le module d'extension est lancé quand le système d'exploitation du terminal mobile démarre.

2. Procédé selon la revendication 1, comprenant en outre l'étape suivante :
mettre en oeuvre un processus d'agrandissement sur l'interface native selon une proportion d'agrandissement locale prédéfinie.

3. Procédé selon la revendication 1 ou 2, comprenant en outre l'étape suivante :
mettre en oeuvre des processus d'agrandissement et de redéfinition sur la zone de saisie de texte d'application mobile originale dans l'interface native agrandie selon une proportion d'agrandissement d'entrée prédéfinie.

4. Procédé selon la revendication 3, dans lequel, si la proportion d'agrandissement d'entrée n'est pas prédéfinie, mettre en oeuvre des processus d'agrandissement et de redéfinition adaptatifs sur la zone de saisie de texte d'application mobile originale selon l'interface native agrandie.

5. Procédé selon la revendication 4, comprenant en outre l'étape suivante :
mettre en oeuvre des processus d'agrandissement et de redéfinition sur un clavier tactile pour une saisie d'informations ou une police de caractères de saisie d'informations par l'utilisateur dans la nouvelle zone de saisie de texte d'application mobile selon la proportion d'agrandissement d'entrée ou l'interface native agrandie.

6. Procédé selon la revendication 1 ou 2, comprenant en outre l'étape suivante :
réécrire dans la zone de saisie de texte d'application mobile originale les informations saisies par l'utilisateur (20) dans la nouvelle zone de saisie de texte d'application mobile puis fermer l'interface native.

7. Terminal mobile faisant fonctionner un module d'extension dans un système d'exploitation pour agrandir une zone de saisie de texte d'application mobile basée sur un dispositif de surveillance d'évènement, comprenant :
un module de surveillance d'évènement d'entrée de zone de saisie de texte, configuré pour surveiller et intercepter un évènement d'entrée d'utilisateur dans une zone de saisie de texte d'application mobile ; et
un module de surveillance d'évènement de redéfinition de zone de saisie de texte, configuré pour, après avoir surveillé et intercepté l'évènement d'entrée d'utilisateur, créer de façon nouvelle une interface native de l'application mobile, agrandir et redessiner la zone de saisie de texte d'application mobile originale dans l'interface native pour obtenir une nouvelle zone de saisie de texte d'application mobile agrandie, qui est fournie pour qu'un utilisateur puisse saisir des informations ;
dans lequel le module d'extension est lancé quand le système d'exploitation du terminal mobile démarre.

8. Terminal mobile selon la revendication 7, dans lequel le module de surveillance d'évènement de redéfinition de zone de saisie de texte est en outre configuré pour mettre en oeuvre un processus d'agrandissement sur l'interface native selon une proportion d'agrandissement locale prédéfinie.

9. Terminal mobile selon la revendication 7 ou 8, dans lequel le module de surveillance d'évènement de redéfinition de zone de saisie de texte est en outre configuré pour mettre en oeuvre des processus d'agrandissement et de redéfinition adaptatifs sur la zone de saisie de texte d'application mobile originale et/ou un clavier tactile et/ou une police de caractères selon la proportion d'agrandissement d'entrée prédéfinie ou l'interface native agrandie.

10. Terminal mobile selon la revendication 7 ou 8, comprenant en outre :
un module d'interaction de données de zone de saisie de texte, configuré pour réécrire dans la zone de saisie de texte d'application mobile originale les informations saisies par l'utilisateur (20) dans la nouvelle zone de saisie de texte d'application mobile et pour fermer l'interface native.
